# EUROPÄISCHE PATENTSCHRIFT

(11) **EP 3 277 482 B1**
(45) Veröffentlichungstag und Bekanntmachung des Hinweises auf die Patenterteilung: **26.06.2024**
(21) Anmeldenummer: 16714209.0
(22) Anmeldetag: 30.03.2016
(51) Int. Cl.: B29C 64/129, B29C 64/135, B29C 64/393, B29C 67/00, B33Y 10/00, B33Y 30/00, B33Y 50/02

(54) **VERFAHREN UND VORRICHTUNG ZUM SCHICHTWEISEN AUFBAU EINES FORMKÖRPERS**
METHOD AND DEVICE FOR THE LAYERED CONSTRUCTION OF A SHAPED PART
PROCÉDÉ ET DISPOSITIF DE FABRICATION ADDITIVE D'UN CORPS

(30) Priorität: 02.04.2015 AT 2052015
(43) Veröffentlichungstag der Anmeldung: 07.02.2018
(73) Patentinhaber: Lithoz GmbH, 1060 Wien (AT)
(72) Erfinder: HOMA, Johannes, 7503 Großpetersdorf (AT); PATZER, Johannes, 3400 Klosterneuburg (AT); REITER, Rafael, 1090 Wien (AT); SPITZBART, Manfred, 1160 Wien (AT)
(74) Vertreter: Keschmann, Marc
(86) Internationale Anmeldenummer: PCT/AT2016/000032
(87) Internationale Veröffentlichungsnummer: WO 2016/154645

(56) Entgegenhaltungen:
- EP-A2- 0 354 637
- WO-A1-2012/143785
- WO-A1-2013/026087

## Beschreibung

Die Erfindung betrifft ein Verfahren zum schichtweisen Aufbau eines Formkörpers aus photopolymerisierbarem Material, nämlich einem Harz mit keramischem Füllstoff, bei dem nacheinander Formkörperschichten übereinander ausgebildet werden, indem jeweils in einer Wanne eine Materialschicht vorgegebener Dicke des photopolymerisierbaren Materials ausgebildet wird und die Bauplattform oder der an der Bauplattform zumindest teilweise aufgebaute Formkörper in die Materialschicht abgesenkt wird, sodass sich zwischen der Bauplattform bzw. dem Formkörper und dem Wannenboden eine Schicht des photopolymerisierbaren Materials ausbildet, die insbesondere durch Bestrahlung durch den Wannenboden hindurch ortsselektiv zur Ausbildung der gewünschten Form der Formkörperschicht ausgehärtet wird.

Die Erfindung betrifft weiters eine Vorrichtung zur Durchführung des erfindungsgemäßen Verfahrens.

Ein Verfahren und eine Vorrichtung der eingangs genannten Art sind in der WO 2010/045950 A1 und in der EP 2505341 A1 beschrieben. Das Verfahren dient zum schichtweisen Aufbau eines Formkörpers unter Anwendung einer lithographiebasierten generativen Fertigung, zum Beispiel Rapid Prototyping. Dabei wird eine definierte Schicht aus photopolymerisierbarem Material, das sich in einer Wanne mit einem wenigstens in Teilbereichen lichtdurchlässig ausgebildeten, horizontalen Boden befindet, auf folgende Weise gebildet. Eine vertikal gesteuert bewegliche Bauplattform wird von einem Hubmechanismus getragen und ist an der Wanne so angeordnet, dass sie unter Steuerung einer Steuereinheit durch den Hubmechanismus vertikal angehoben und abgesenkt werden kann. Durch Absenken der Bauplattform in das photopolymerisierbare Material in der Wanne wird Material aus dem Zwischenraum zwischen der Unterseite der Bauplattform und dem Wannenboden verdrängt. Durch genaues Einstellen der vertikalen Position der Bauplattform kann so eine Schicht aus photopolymerisierbarem Material zwischen der Unterseite der Bauplattform und dem Wannenboden mit genau definierter Schichtdicke erzeugt werden. Die so definierte Schicht aus photopolymerisierbarem Material wird dann durch ortsselektive Belichtung von unten durch den lichtdurchlässigen Wannenboden in der gewünschten Geometrie belichtet, um die Schicht dadurch an der Bauplattform auszuhärten. Anschließend wird die Bauplattform mit der daran ausgehärteten ersten Schicht angehoben und photopolymerisierbares Material in den belichteten Bereich nachgeführt. Diese Schritte werden wiederholt, um so den Formkörper aus aufeinanderfolgenden Schichten aufzubauen, wobei aber die Schicht aus photopolymerisierbarem Material nun nicht von der Bauplattform, sondern vom unfertigen Formkörper definiert wird.

Das oben beschriebene Verfahren ist insbesondere für die Verarbeitung von photopolymerisierbarem Material mit hoher Viskosität geeignet. Eine hohe Viskosität des Materials ist im Fall von keramikgefülltem photopolymerisierbarem Material zu beobachten. Die hohe Viskosität des photopolymerisierbaren Materials bedingt in der lithographiebasierten generativen Fertigung eine erhebliche Verschlechterung der Verarbeitbarkeit. Wenn im Rahmen der vorliegenden Erfindung von hochviskosem Material die Rede ist, so bezieht sich dies insbesondere auf eine Viskosität von mindestens 10 Pa·s.

Eines der Probleme bei der Verwendung von hochviskosem photopolymerisierbarem Material liegt in der Entstehung von Gas-, insbesondere Luftblasen im Material. Im Laufe des Bauprozesses kann es auf mehrere Arten zur Bildung von Luft- bzw. Gasblasen im photopolymerisierbaren Material kommen; einerseits durch Einschluss von Gas unmittelbar vor der Belichtung, während die Bauplattform bzw. der unfertige Formkörper in die Materialoberfläche eintaucht, und andererseits durch Schaumbildung beim Ablösen der belichteten Formkörperschicht vom Wannenboden. Gasblasen im Material manifestieren sich als Gaseinschlüsse im Grünkörper und stellen zu vermeidende Defekte in der Bauteilstruktur dar, die zu Rissbildung beim Entbinden und Sintern und Bauteilversagen während der Anwendung führen können (z.B. bei keramischen Bauteilen).

Aus der WO 2013/026087 A1 ist eine Wanne mit einem flexiblen Wannenboden bekannt, der während des Eintauchens der Werkstückes verformt wird.

Aus der EP 0354637 A2 ist ein Verfahren bekannt, bei dem CAD-Daten in 3D-Druckdaten umgerechnet werden.

Die WO 2012/143785 A1 offenbart eine Vorrichtung zum schichtweisen Aufbau eines Formkörpers aus photopolymerisierbarem Material.

Es ist daher die Aufgabe der vorliegenden Erfindung, ein Verfahren und eine Vorrichtung der eingangs genannten Art so zu verbessern, dass die Gaseinschlüsse im photopolymerisierbaren Material effektiv aus dem zu belichtenden Bereich entfernt werden oder ihre Entstehung von vornherein vermieden wird.

Diese Aufgabe wird durch ein Verfahren nach Anspruch 1 und eine Vorrichtung nach Anspruch 10 gelöst.

Der Erfindung liegt die Erkenntnis zugrunde, dass beim Absenken der Bauplattform bzw. des unfertigen Formkörpers in die Materialschicht ein Materialfluss erzeugt wird, der nicht nur Material, sondern auch eingeschlossene Gasblasen seitlich aus dem Spalt zwischen Bauplattform bzw. unfertigem Formkörper und Wannenboden hinausdrückt. Je größer der Absenkweg der Bauplattform bzw. des unfertigen Formkörpers im Material gewählt wird, desto mehr Material wird aus dem genannten Spalt verdrängt, und mit diesem die eingeschlossenen Gasblasen. Der Absenkweg ist dabei umso länger, je größer die Materialschichtdicke gewählt ist. Daher kann mit einer Steigerung der Materialschichtdicke die Anzahl der Luftblasen in der zu belichtenden Fläche signifikant reduziert werden. Diese Methode bringt jedoch eine Erhöhung der Prozessdauer und eine Verringerung der Materialqualität durch die Beeinträchtigung eines erhöhten Volumens durch Streulicht mit sich.

Erfindungsgemäß ist daher vorgesehen, dass die Materialschichtdicke, d.h. die Füllhöhe des in der Wanne befindlichen Materials, während des Aufbaus des Formkörpers zumindest einmal variiert wird. Die schichtabhängige Variierung der Materialschichtdicke erfolgt hierbei bevorzugt mit dem Ziel, die für die Bildung der jeweiligen Formkörperschicht erforderliche Materialschichtdicke zu minimieren, nämlich gerade groß genug zu wählen, damit der beim Eintauchen der Bauplattform bzw. des unfertigen Formkörpers ins Material entstehende Materialfluss für die Verdrängung der Gasblasen aus dem zu belichtenden Bereich ausreichend ist.

Das mindestens einmalige Variieren der Materialschichtdicke während des Bauprozesses bedeutet hierbei, dass die Materialschichtdicke eine Funktion der Formkörperschichtnummer ist, d.h. die Materialschichtdicke wird für die Ausbildung wenigstens einer ersten Formkörperschicht anders gewählt als die Materialschichtdicke für die Ausbildung wenigstens einer weiteren Formkörperschicht. Bevorzugt ist vorgesehen, dass die Materialschichtdicke während des Bauprozesses mehrmals variiert wird. Besonders bevorzugt ist eine Vorgehensweise, bei der die Materialschichtdicke für die Herstellung jeder Formkörperschicht neu errechnet wird.

Bevorzugt weist die Materialschicht an jeder Stelle die gleiche Dicke auf. Die Oberfläche der Materialschicht ist somit plan und verläuft parallel zum Wannenboden. In diesem Fall ist die Materialschichtdicke definiert als der im rechten Winkel zum Wannenboden gemessene Abstand zwischen dem Wannenboden und der Oberfläche der Materialschicht. Wenn die Materialschicht hingegen ungleichmäßig dick ist, ist die Materialschichtdicke definiert als der im rechten Winkel zum Wannenboden gemessene Abstand zwischen dem Wannenboden und der höchsten Stelle der Materialschicht.

Die Bestimmung der für die Ausbildung der jeweiligen Formkörperschicht optimalen Materialschichtdicke erfolgt bevorzugt unter Berücksichtigung der Geometrie der vorangehenden Formkörperschicht. Insbesondere kann die notwendige Materialschichtdicke durch Bestimmung des geometrisch bedingten Materialflusses und der geometrisch bedingten Weglängen von möglicherweise vorhandenen Blasen abgeschätzt werden, in der Regel von einer angeschlossenen Recheneinheit. Bevorzugt wird bei Auftreten von Kanten oder Unebenheiten in der Wanne, von denen sich Luftblasen schwer lösen, die Materialschichtdicke ebenfalls passend erhöht.

Als Geometriemerkmal, das bei der Bestimmung der jeweiligen Materialschichtdicke berücksichtigt wird, kann in einfacher Weise die Fläche der vorangehenden Formkörperschicht herangezogen werden. Das Verfahren wird dann so durchgeführt, dass die Materialschichtdicke in Abhängigkeit von der Fläche der unmittelbar vorangehenden Formkörperschicht variiert wird. Dabei wird die Materialschichtdicke umso größer gewählt, je größer die Fläche der unmittelbar vorangehenden Formkörperschicht ist, da die Verdrängungsweglänge von Blasen mit steigender Fläche größer wird. In einer weiteren Ausführungsform des erfindungsgemäßen Verfahrens ist die Materialschichtdicke eine Funktion der Fläche der aktuellen Schicht und der Fläche der davor gebildeten Schicht.

Alternativ oder zusätzlich können aber auch andere Geometriemerkmale der vorangehenden Formkörperschicht als Grundlage für die Bestimmung der aktuellen Materialschichtdicke herangezogen werden. Als Geometriemerkmale können beispielsweise das Vorhandensein von Ausnehmungen und dgl. in der vorangehenden Formkörperschicht herangezogen werden.

Erfindungsgemäß wird so vorgegangen, dass die Materialschichtdicke in Abhängigkeit von einem errechneten Wert der Verdrängungsweglänge von an der Grenzfläche zwischen der Bauplattform bzw. dem Formkörper und dem photopolymerisierbaren Material entstehenden Blasen variiert wird.

Um die einzelnen Materialschichten für die hintereinander herzustellenden Formkörperschichten auszubilden, wird bevorzugt so vorgegangen, dass die Bauplattform nach dem Aushärtungsschritt angehoben und zur Ausbildung der nächsten Formkörperschicht wieder in die Wanne abgesenkt wird, nachdem Material unter der angehobenen Bauplattform nachgeführt wurde, um die Materialschicht auszubilden.

Die Nachführung des Materials wird in diesem Zusammenhang bevorzugt mittels Materialverteilung mit Hilfe einer Rakel vorgenommen, wobei die Schichtdicke der Materialschicht durch Einstellung des Abstands zwischen der Unterkante der Rakel und dem Wannenboden eingestellt wird.

Wie bereits erwähnt, entstehen Gasblasen insbesondere beim Eintauchen der Bauplattform bzw. des unfertigen Formkörpers in die Materialschicht, und zwar an der Grenzfläche zwischen der Bauplattform bzw. dem Formkörper und dem hochviskosen photopolymerisierbaren Material. Bei einer vorteilhaften Weiterbildung des erfindungsgemäßen Verfahrens wird der Ort des ersten Inkontaktkommens der sich absenkenden Bauplattform bzw. des sich absenkenden Formkörpers mit der Materialschicht gezielt beeinflusst. Dies kann dadurch erfolgen, dass wenigstens eine Materialschicht in seitlicher Richtung eine Schichtdickenvariation aufweist. Dies bedeutet, dass die Materialschicht nicht überall die gleiche Schichtdicke aufweist, sondern in wenigstens einem Teilbereich dicker ausgebildet ist als in einem anderen Teilbereich. Dies führt dazu, dass die Bauplattform bzw. der daran ausgebildete unfertige Formkörper die Materialschicht zuerst in dem Bereich berührt, in dem die Schichtdicke am größten ist. Es kann sich dabei um einen punktförmigen, linienförmigen oder sich zweidimensional erstreckenden Flächenbereich handeln. Es kann lediglich ein Bereich der Materialschicht mit gegenüber den übrigen Bereichen größerer Schichtdicke oder zwei oder mehrere Bereiche mit gegenüber den übrigen Bereichen größerer Schichtdicke vorgesehen sein.

Die seitliche Dickenvariation der Materialschicht kann in vielfältiger Form erfolgen. Insbesondere kann eine Dickenvariation in lediglich einer seitlichen Erstreckung vorgesehen sein oder in zwei quer zueinander stehenden seitlichen Erstreckungen. Bevorzugt ist vorgesehen, dass die wenigstens eine Materialschicht einen rampenförmigen Bereich aufweist. Die Rampenform ist ein Beispiel für eine Ausführungsform, bei der die Schichtdicke lediglich in einer Dimension, d.h. in einer Seitenrichtung variiert wird. Alternativ kann die wenigstens eine Materialschicht einen kegelförmigen Bereich aufweisen. Die Kegelform ist ein Beispiel für eine Ausführungsform, bei der die Schichtdicke in zwei Dimensionen, d.h. bei einem kartesischen Koordinatensystem mit in z-Richtung definierter Schichtdicke in x- und in y-Richtung variiert wird.

In einer anderen Ausführungsform mit ortsabhängiger Materialschichtdicke, d.h. einer lateral variierenden Materialhöhe innerhalb einer Schicht, wird die Schichtdicke an Stellen, an denen potentiell Blasen mit großer Verdrängungsweglänge entstehen, gegenüber dem Rest der Schicht erhöht, um lokal für einen größeren Materialfluss zu sorgen. In einer weiteren Ausführungsform mit ortsabhängiger Materialschichtdicke ist die Materialoberfläche signifikant uneben, um die Kontaktpunkte günstig zu definieren und die Anzahl der Blasen einschließenden Kontaktpunkte zu minimieren. In einer weiteren Ausführungsform mit ortsabhängiger Materialschichtdicke wird annähernd nur an zu belichtenden Stellen Material aufgetragen, um die Beeinträchtigung des Materials durch Streulicht zu minimieren.

Um die Materialschichtdicke mit lateraler Dickenvariation herzustellen, ist ein verstellbares Element oder eine verstellbare Wanne bevorzugt, die das Material vor der Belichtung der Formkörperschicht abhängig von der lateralen Position auftragen.

Die laterale Variation der Schichtdicke wird im Rahmen der vorliegenden Erfindung ergänzend zur erfindungsgemäßen schichtabhängigen Variation der Materialschichtdicke vorgenommen. Bei der schichtabhängigen Variation der Materialschichtdicke wird die Dicke der Materialschicht während des Aufbaus des Formkörpers zumindest einmal variiert.

Gemäß einem weiteren Aspekt der Erfindung ist eine Vorrichtung zur Durchführung des erfindungsgemäßen Verfahrens gemäß dem Anspruch 10 vorgesehen.

Die Erfindung wird nachfolgend anhand von in der Zeichnung schematisch dargestellten Ausführungsbeispielen näher erläutert. In dieser zeigen
Fig. 1 bis 3 eine Schnittansicht einer Vorrichtung zum schichtweisen Aufbau eines Formkörpers in aufeinanderfolgenden Phasen des Verfahrensablaufs,
Fig. 4 das Verhalten des photopolymerisierbaren Materials beim Eintauchen der Bauplattform bzw. des unfertigen Formkörpers,
Fig. 5 den Einschluss einer Luftblase während des Eintauchprozesses,
Fig. 6 den Einsatz einer lateralen Variation der Materialschichtdicke zur Definition von Kontaktpunkten, welche die Anzahl der Blasen einschließenden Kontaktpunkte minimieren,
Fig. 7 den Verdrängungsprozess von Material und einer Gasblase,
Fig. 8 unterschiedliche Weglängen von Luftblasen abhängig von ihrer Position,
Fig. 9 unterschiedliche Weglängen für eine Schichtgeometrie mit Ausnehmungen,
Fig. 10 den Einsatz verschiedener Materialschichtdicken zur Minimierung der für die Verdrängung der Gasblasen eingesetzten Materialmenge,
Fig. 11 den linearen Zusammenhang zwischen Schichtfläche und Materialschichtdicke,
Fig. 12 den Einsatz verschiedener Materialschichtdicken zur Erhöhung des Materialflusses an Stellen mit möglichen Gaseinschlüssen mit langen Weglängen, und
Fig. 13 den Einsatz einer ortsabhängig variierten Materialschichtdicke zur Verringerung des in der Wanne befindlichen Materials.

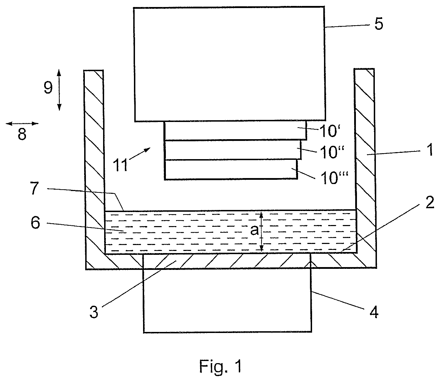

Die Funktionsweise einer Vorrichtung zur Ausführung eines Verfahrens der vorliegenden Erfindung wird zunächst unter Bezugnahme auf die Fig. 1 bis 3 beschrieben, welche eine für sich gesehen bereits aus der EP 2505341 A1 bekannte Vorrichtung zeigen. Die in Luft oder einer anderen Gasatmosphäre befindliche Vorrichtung weist eine Wanne 1 auf, deren Wannenboden 2 zumindest in einem Teilbereich 3 durchsichtig oder durchscheinend ist. Dieser Teilbereich 3 des Wannenbodens erfasst zumindest die Ausdehnung einer Belichtungseinheit 4, die unter dem Wannenboden 2 angeordnet ist. Die Belichtungseinheit 4 weist eine nicht näher dargestellte Lichtquelle und einen Lichtmodulator auf, mit dem die Intensität von einer Steuereinheit gesteuert und ortsselektiv eingestellt werden kann, um ein Belichtungsfeld mit der für die momentan zu bildende Schicht gewünschten Geometrie an dem Wannenboden 2 zu erzeugen. Alternativ kann in der Belichtungseinheit auch ein Laser verwendet werden, dessen Lichtstrahl über einen beweglichen Spiegel, der von einer Steuereinheit gesteuert wird, das Belichtungsfeld mit dem gewünschten Intensitätsmuster sukzessive abtastet.

Der Belichtungseinheit 4 gegenüber ist über der Wanne 1 eine Bauplattform 5 vorgesehen, die von einem nicht dargestellten Hubmechanismus getragen wird, so dass sie in höhenverstellbarer Weise über dem Wannenboden 2 im Bereich über der Belichtungseinheit 4 gehalten wird. Die Bauplattform 5 kann ebenfalls durchsichtig oder durchscheinend sein.

In der Wanne 1 befindet sich ein Bad aus hochviskosem photopolymerisierbarem Material 6. Der Materialspiegel 7 des Bades wird durch ein geeignetes Element definiert, wie z.B. eine Rakel, welche das Material in einer bestimmten Materialschichtdicke a gleichmäßig auf den Wannenboden 2 aufträgt. Der Wanne 1 kann beispielsweise eine Führungsschiene zugeordnet sein, auf der ein Schlitten in Richtung des Doppelpfeils 8 verschieblich geführt ist. Ein Antrieb sorgt für die Hin- und Herbewegung des Schlittens, der eine Halterung für eine Rakel aufweist. Die Halterung weist beispielsweise eine Führung und eine Verstelleinrichtung auf, um die Rakel in Richtung des Doppelpfeils 9 in Höhenrichtung zu verstellen. Damit kann der Abstand der Unterkante der Rakel vom Boden 2 der Wanne 1 eingestellt werden. Die Rakel kommt zum Einsatz, wenn sich die Bauplattform wie in Fig. 1 dargestellt im angehobenen Zustand befindet, und dient dazu das Material 6 gleichmäßig unter Einstellung einer vorgegebenen Schichtdicke zu verteilen. Die sich beim Materialverteilungsvorgang ergebende Schichtdicke des Materials 6 ist durch den Abstand der Unterkante der Rakel vom Boden 2 der Wanne 1 definiert.

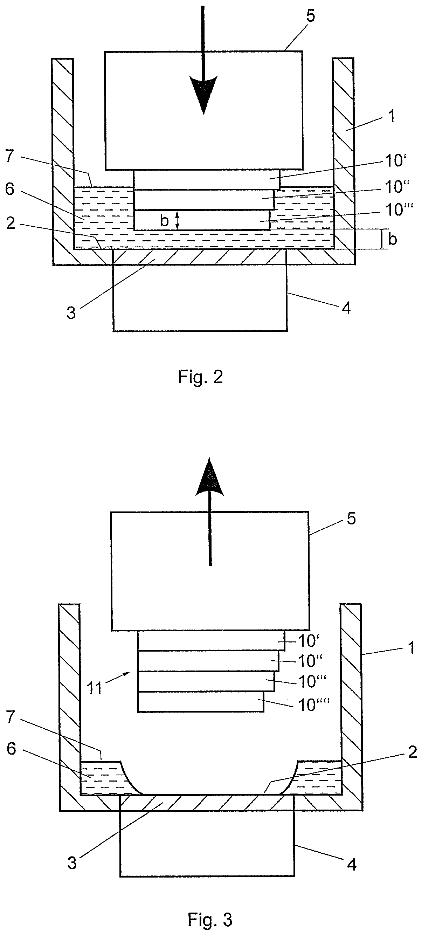

Die so entstandene Materialschichtdicke a ist dabei größer als die Formkörperschichtdicke b (Fig. 2). Zur Definition einer Schicht aus photopolymerisierbarem Material wird in folgender Weise vorgegangen. Die Bauplattform 5, an der bereits Formkörperschichten 10', 10" und 10‴ ausgebildet wurden, wird, wie in Fig. 2 dargestellt, durch den Hubmechanismus in gesteuerter Weise abgesenkt, sodass die Unterseite der untersten Formkörperschicht 10‴ die Oberfläche des Materialbads 6 mit Höhe a zunächst berührt, dann eintaucht und sich dem Wannenboden 2 soweit nähert, dass zwischen der Unterseite der untersten Formkörperschicht 10"' und dem Wannenboden 2 genau die gewünschte Formkörperschichtdicke b verbleibt. Während dieses Eintauchvorgangs wird photopolymerisierbares Material aus dem Zwischenraum zwischen der Unterseite der Bauplattform 5 und dem Wannenboden 2 verdrängt. Sobald sich die Formkörperschichtdicke b eingestellt hat, erfolgt die für diese Formkörperschicht spezifische ortsselektive Belichtung, um die Formkörperschicht 10"" in der gewünschten Form auszuhärten. Nach der Bildung der Formkörperschicht 10"" wird die Bauplattform 5 mittels des Hubmechanismus wieder angehoben, was den in Fig. 3 gezeigten Zustand herbeiführt. Das photopolymerisierbare Material 6 ist im belichteten Bereich nicht mehr vorhanden.

Diese Schritte werden nachfolgend mehrfach wiederholt, um weitere Formkörperschichten 10 aus photopolymerisierbarem Material zu erhalten. Der Abstand der Unterseite der zuletzt gebildeten Formkörperschicht 10 zum Wannenboden 2 wird auf die gewünschte Formkörperschichtdicke b eingestellt und daraufhin das photopolymerisierbare Material in der gewünschten Weise ortsselektiv ausgehärtet.

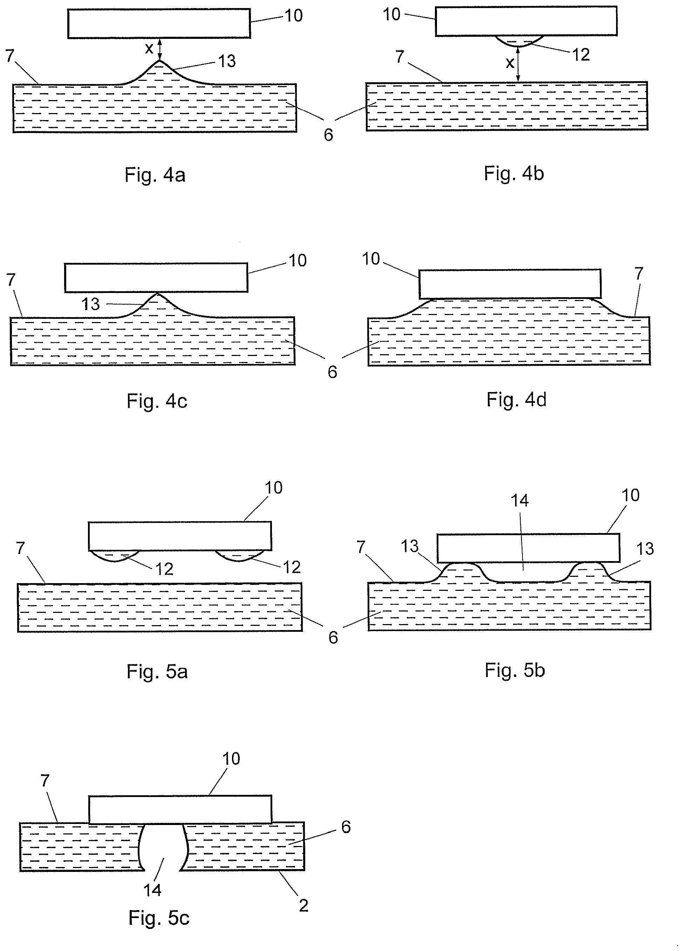

Im Laufe des Bauprozesses kann es auf mehrere Arten zur Bildung von Luftblasen im photopolymerisierbaren Material kommen, die im Folgenden in Bezug auf Fig. 4 beschrieben werden.

Die erste Möglichkeit zur Entstehung von Luftblasen geschieht während der Berührung des Materialbades 6 durch die Bauplattform 5 bzw. die unterste Formkörperschicht 10 (im Folgenden als "Kontaktierung" bezeichnet), wie anhand von Fig. 4 erläutert wird. Die Kontaktierung findet zunächst nicht auf der ganzen Fläche der untersten Formkörperschicht 10 statt, sondern nur am Punkt 13 (im Folgenden als Kontaktpunkt bezeichnet) des geringsten Abstandes x zwischen der untersten Formkörperschicht 10 und der Materialoberfläche 7. Der Ablauf der Kontaktierung wird durch ungewollte Unregelmäßigkeiten in der Materialoberfläche (Fig. 4a) und in der Bauplattform 5 bzw. der untersten Formkörperschicht 10 (Fig. 4b) festgelegt, im letzteren Fall insbesondere durch nicht ausgehärtetes Material 12, das während des Anhebens der Bauplattform 5 an der Unterseite der zuletzt belichteten Formkörperschicht 10 anhaftet. Bei Absenken der Bauplattform 5 vergrößert sich der Kontaktpunkt 13 (Fig. 4c) schnell auf eine Kontaktfläche (Fig. 4d), weil die Oberflächen aufgrund von Adhäsionskräften und Oberflächenspannung zwischen Material und der Bauplattform 5 bzw. der untersten Formkörperschicht 10 zusammengezogen werden und der Punkt sich zu einer Fläche vergrößert.

Während dieses Prozesses kann es auch an anderen Stellen zu Berührungen und Kontaktflächen kommen. In ungünstigen Fällen schließen mehrere Kontaktflächen beim Zusammenwachsen Luft- bzw. Gasblasen ein. Fig. 5 zeigt diesen Fall, wobei der Einfachheit halber ohne Beschränkung der Allgemeinheit ein zweidimensionales System angenommen wird. Fig. 5a zeigt die letztgebildete Formkörperschicht 10 des unfertigen Formkörpers 11, an dem nicht ausgehärtetes Material 12 klebt, und das Material 6 in der Wanne 1. Das nicht ausgehärtete Material 12 bildet gleichzeitig zwei Kontaktpunkte 13 (Fig. 5b), wodurch eine Gasblase 14 eingeschlossen wird. Bei weiterer Absenkung der Bauplattform 5 (Fig. 5c) wird die Gasblase ebenfalls nach unten gedrängt und berührt sowohl den Wannenboden 2 als auch die Bauplattform 5 bzw. die unterste Formkörperschicht 10.

Je größer die Bauteilfläche ist, desto höher ist die Zahl der Einschlüsse, da jede Kontaktfläche eine begrenzte Ausdehnung besitzt und außerhalb davon jederzeit neue Kontaktpunkte entstehen können, während das Bauteil weiter abgesenkt wird.

Speziell bei der ersten Formkörperschicht 10' kommt es sehr häufig zum Einschluss von Luft- bzw. Gasblasen, da die gesamte Bauplattform 5, die in der Regel die Fläche der Formkörperschichten 10 übersteigt, in das photopolymerisierbare Material 6 eintaucht und die Wahrscheinlichkeit für mehrere Kontaktpunkte steigt.

Die zweite Möglichkeit zur Entstehung von Luftblasen findet während des Anhebens statt. Beim Ablösen der belichteten Schicht vom Wannenboden 2 kommt es speziell bei komplizierten Schichten (d.h. Schichten mit vielen Ausnehmungen und, in Folge, viel Rand) zu einer Schaumbildung.

Die Wahrscheinlichkeit für Lufteinschlüsse ist geringer, wenn die Bauplattform 5 bzw. die unterste Formkörperschicht 10 und die Oberfläche 7 des Materials 6 bei ihrer Berührung nicht parallel sind, wodurch die Kontrolle über die Position der Kontaktpunkte und den Zeitpunkt ihres Beginns maßgeblich erhöht wird. Das kann in verschiedenen Ausformungen realisiert werden, z.B. durch eine winkel-, höhen- oder formverstellbare Wanne 1 oder Bauplattform 5. Bei einer bevorzugten Ausbildung der Erfindung wird dies jedoch durch eine schräge oder unebene Materialoberfläche 7 erreicht, was mechanisch einfacher zu realisieren ist und mehr Möglichkeiten bietet, z.B. eine wellenförmige Oberfläche 7 oder eine schiefe Oberfläche 7. Durch eine entsprechend gewählte Materialoberfläche 7 kann erreicht werden, dass sich ein einziger Kontaktpunkt sukzessive über die ganze Bauteiloberfläche ausbreitet und keine weiteren Kontaktpunkte entstehen.

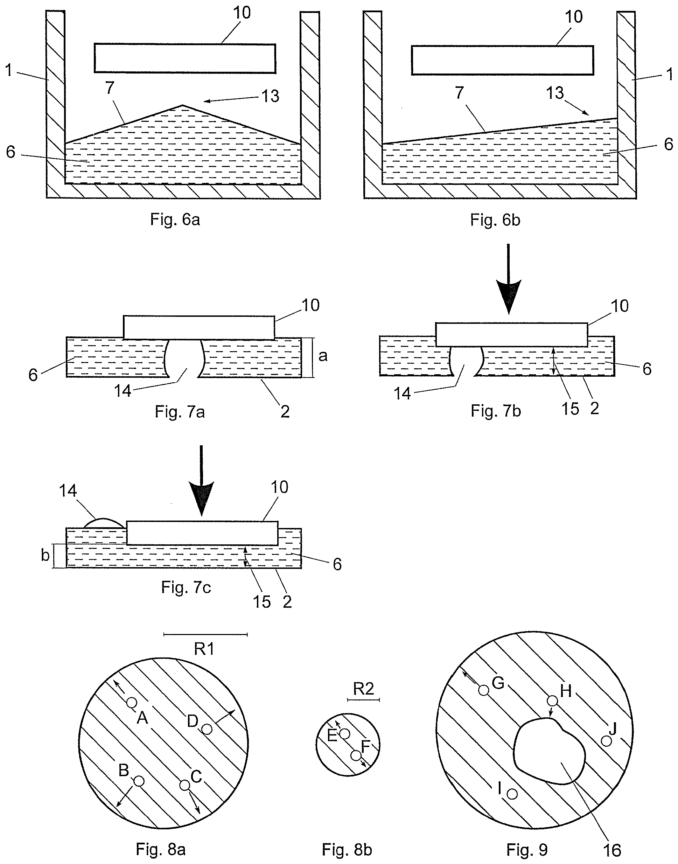

Fig. 6a zeigt eine Ausführung mit einer solchen Materialschicht 6, deren Schichtdicke a ortsabhängig bzw. in seitlicher Richtung variiert. Im konkreten Fall bildet die Materialoberfläche 7 eine schiefe Ebene und es entsteht dadurch der erste Kontaktpunkt 13 am höchsten Punkt der schiefen Ebene, wobei sich der erste Kontaktpunkt 13 sukzessive über die Bauteiloberfläche ausbreitet. Fig. 6b zeigt eine analoge Ausführung, bei der die Materialoberfläche pyramiden- oder kegelförmig ist.

Die bei der Berührung des Materialbades 6 durch die Bauplattform 5 bzw. die unterste Formkörperschicht 10 entstehenden Luftblasen können durch teilweises seitliches Herauspressen des Materials 6 unterhalb der Bauplattform 5 bzw. der untersten Formkörperschicht 10 entfernt werden, was im Folgenden anhand von Fig. 7 beschrieben wird. Die unterste Formkörperschicht 10 kontaktiert das Material beim Absenken der Bauplattform 5 auf der Höhe a und übt während ihrer weiteren Absenkung auf die Formkörperschichtdicke b Kraft auf das Material 6 unterhalb aus, wodurch es seitlich aus dem Spalt 15 zwischen der untersten Formkörperschicht 10 und dem Wannenboden 2 hinausgedrückt wird. Wenn sich Luftblasen 14 im Material befinden, werden sie vom Materialfluss mitgenommen.

In Fig. 7a ist ersichtlich, dass eine Luftblase 14 eingeschlossen wurde. Der Materialfluss nimmt die Blase 14 zum Bauteilrand mit (Fig. 7b), wo sie zur Materialoberfläche 7 aufsteigt (Fig. 7c) und sich nicht mehr im zu belichtenden Bereich befindet.

Mit wachsender Fläche der zuletzt ausgebildeten Schicht erhöht sich die Zahl der Luftblasen 14, aber proportional dazu die Materialmenge im Spalt 15 und damit auch der Materialfluss. Gleichzeitig steigt auch die Weglänge, die eine Luftblase 14 bis zum äußeren Rand des Bauteiles 11 zurücklegen muss, und damit sinkt die Wahrscheinlichkeit, dass sie ganz aus dem Spalt 15 zwischen Bauteil 11 und Wannenboden 2 hinausgedrängt wird. Fig. 8a zeigt eine Formkörperschicht eines zylindrischen Formkörpers 11, konkret einen Kreis mit Radius R1. Die Pfeile illustrieren die verschiedenen Weglängen, die eine Blase 14, die an den Punkten A, B, C oder D entsteht, zurücklegen muss. Im Vergleich dazu haben Blasen E und F (Fig. 8b), die bei einem zylindrischen Formkörper mit Radius R2, der kleiner ist als R1, entstehen können, geringere Weglängen, und es ist somit auch eine geringere Materialschichtdicke zur Herstellung eines ausreichenden Flusses notwendig.

Wenn die unmittelbar vor der aktuellen Formkörperschicht gebauten Schichten Ausnehmungen 16 besitzen, kann auch Materialfluss in diese Ausnehmungen 16 stattfinden, wie in Fig. 9 dargestellt wird (Punkte G und H und ihre durch Pfeile dargestellten Weglängen). Dadurch wird die durchschnittliche Weglänge der Luftblasen 14 verringert. Gleichzeitig ist damit der Materialfluss aber nicht eindeutig nach außen (also vom Bauteil weg) definiert, was zu Stellen im Spalt zwischen der untersten Formkörperschicht 10 und dem Wannenboden 2 ohne Materialfluss führen kann, an denen Luftblasen 14 dann verharren (Punkte I, J), sowie zu generell verschlechtertem Materialfluss. Die Geometrie des Bauteils kann also die Entfernung von Luftblasen 14 durch Materialverdrängung sowohl positiv als auch negativ beeinflussen.

Ausnehmungen erschweren die Entfernung von Luftblasen 14 des Weiteren auch durch die Tatsache, dass eine Luftblase 14 sich von einer eine Ausnehmung 16 begrenzenden Kante am Bauteil 11 aufgrund von Oberflächenspannungen nur unter Krafteinfluss löst.

Die Menge des hinausgedrückten oder in Löcher 16 in der untersten Formkörperschicht 10 gedrückten Materials sowie der Materialfluss verschwinden bei Wahl der Schichtdicke a der Materialschicht 6 und der Schichtdicke b der Formkörperschicht, sodass a=b, und steigen mit zunehmender Materialschichtdicke a. Eine Erhöhung der Materialschichtdicke a sorgt also für eine verringerte Menge an Luftblasen 14 nach der Absenkung der Bauplattform 5.

Speziell bei hochviskosem ( keramisch gefülltem) photopolymerisierbaren Material und kleinen Formkörperschichtdicken (b < 100 um) kann das Absenken der Bauplattform 5 bzw. des unfertigen Formkörpers 11 bei hohen Materialschichtdicken a nur langsam vorgenommen werden, da dem Material 6 genug Zeit zum Ausfluss aus dem Spalt 15 zwischen der Bauplattform 5 bzw. der untersten Formkörperschicht 10 und dem Wannenboden 2 gegeben werden muss. Diese Wartezeit erhöht sich mit steigender Materialschichtdicke a und führt zu einer signifikanten Verlängerung der Gesamtprozesszeit.

Weiters ist bei hoher Materialschichtdicke a eine Verschlechterung der Bauteilpräzision und -qualität zu verzeichnen. Zum einen wird eine größere Menge an Material Streulicht und anderen ungünstigen Einflüssen ausgesetzt, was seine Qualität verschlechtert. Zum anderen übt das Material während seiner Verdrängung eine höhere Kraft auf den unfertigen Formkörper 11 aus, was zu (vorübergehender) Deformierung des Bauteils 11 und Schichthöhenfehlern führen kann. Für das photopolymerisierbare Harz mit dem Füllstoff Al₂O₃ hat es sich gezeigt, dass bei einer fixen Formkörperschichtdicke b von 25 um folgende Werte der Materialschichtdicke a vorteilhaft sind:
- a=100 µm für einen Bauteildurchmesser d=0,5 mm
- a=250 um für einen Bauteildurchmesser d=4 mm, und
- a=400 um für einen Bauteildurchmesser d=8 mm.

In der Regel wird aus den oben genannten Gründen versucht, die Materialschichtdicke a so gering wie möglich zu halten. Bei herkömmlichen Verfahren zum schichtweisen Aufbau eines Formkörpers wird die Materialschichtdicke a einmal festgelegt und über den gesamten Bauprozess des betreffenden Formkörpers gleich gelassen.

Im Gegensatz dazu ist erfindungsgemäß vorgesehen, dass die Materialschichtdicke a während des Bauprozesses wenigstens einmal angepasst wird, und zwar insbesondere im Hinblick auf eine Optimierung der Blasenverdrängung bei gleichzeitiger Minimierung der Schichtdicke, um die beschriebenen Nachteile großer Schichtdicken möglichst zu vermeiden. Bevorzugt ist vorgesehen, dass eine optimale Schichtdicke a der Materialschicht 6 für jede zu belichtende Formkörperschicht neu bestimmt wird, sodass der beim Eintauchen des Bauteils 11 ins Material 6 entstehende Materialfluss ausreicht, um die Verdrängung der Gasblasen 14 aus dem zu belichtenden Bereich zu gewährleisten. Die Materialschichtdicke a ist somit eine Funktion der Schichtnummer n: a = f(n).

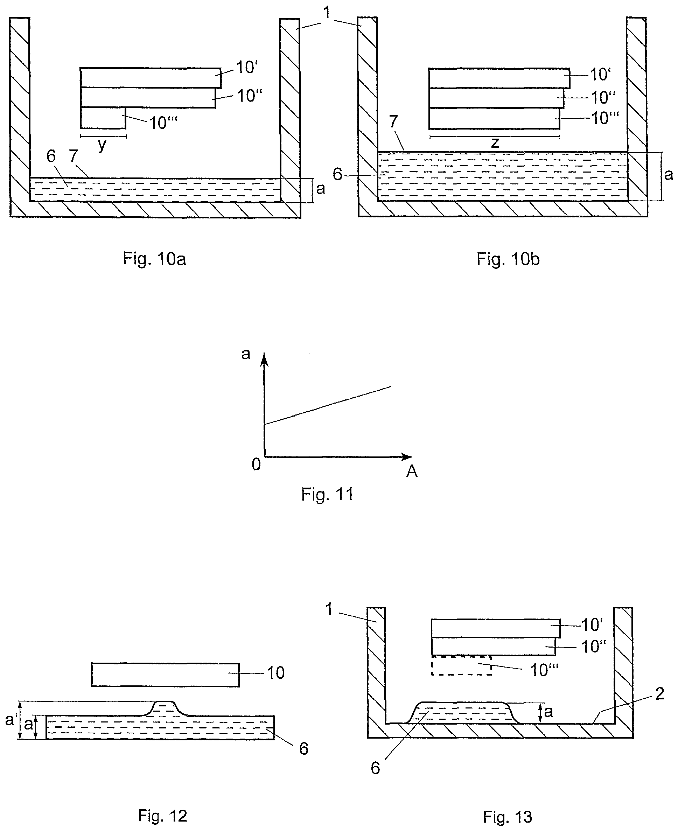

In Fig. 10a (geringe Materialschichtdicke a) und Fig. 10b (höhere Materialschichtdicke a) werden zwei Fälle verglichen. Die zuletzt erzeugte Formkörperschicht 10‴ besitzt in Fig. 10a eine geringe Fläche (Erstreckung y) und in Fig. 10b eine große Fläche (Erstreckung z). Erfindungsgemäß gilt deshalb für die Materialschichtdicke a, dass diese im Falle der Fig. 10a kleiner gewählt werden kann als im Falle der Fig. 10b, um den für die Blasenverdrängung notwendigen Fluss herzustellen.

Bevorzugt wird die notwendige Materialschichtdicke durch Bestimmung des geometrisch bedingten Materialflusses und der geometrisch bedingten Weglängen von möglicherweise vorhandenen Blasen abgeschätzt, in der Regel von einer angeschlossenen Recheneinheit.

Bevorzugt wird bei Auftreten von Kanten im unfertigen Formkörper 11 oder Unebenheiten in der Wanne 1, von denen sich Luftblasen 14 schwer lösen, die Materialschichtdicke a erhöht.

In einer Ausführungsform ist die Materialschichtdicke a von der Fläche der davor gebildeten Formkörperschicht n abhängig, wobei n eine Variable für die Schichtnummer darstellt. In Fig. 11 ist ein bevorzugter linearer Zusammenhang zwischen der Fläche A der vorangehenden Formkörperschicht und der Materialschichtdicke a dargestellt.

In weiteren Ausführungsformen ist die Materialschichtdicke a(n) für eine gegebene Schicht n nicht konstant, sondern lateral ortsabhängig, also a(n,x,y). Dies kann verschiedene positive Effekte haben, wie im Folgenden erläutert wird.

In einer Ausführungsform mit ortsabhängiger Materialschichtdicke a(n,x,y) wird die Materialschichtdicke a an Stellen, an denen potentiell Blasen mit großer Verdrängungsweglänge entstehen, gegenüber dem Rest der Materialschicht 6 erhöht, um lokal für einen größeren Materialfluss zu sorgen. Fig. 12 zeigt eine im Zentrum einer kreisförmigen Materialschicht 6 erhöhte Materialschichtdicke a'.

In einer weiteren Ausführungsform mit ortsabhängiger Materialschichtdicke a(n,x,y) ist die Materialoberfläche signifikant uneben, um die Kontaktpunkte zu definieren und die Anzahl der Blasen 14 einschließenden Kontaktpunkte 13 zu minimieren. Fig. 6a zeigt eine Ausführung mit ortsabhängiger Materialschichtdicke a, bei der die Materialoberfläche 7 eine schiefe Ebene bildet und dadurch der erste Kontaktpunkt 13 am höchsten Punkt der schiefen Ebene entsteht und sich sukzessive über die Bauteiloberfläche ausbreitet. Fig. 6b zeigt eine analoge Ausführung, bei der die Materialoberfläche pyramiden- bzw. kegelförmig ist.

In einer weiteren Ausführungsform mit ortsabhängiger Materialschichtdicke a(n,x,y) wird im Wesentlichen nur an zu belichtenden Stellen Material aufgetragen, um die Beeinträchtigung des Materials durch Streulicht zu minimieren. In Fig. 13 wird die nächste zu belichtende Schicht 10‴ sowie die annähernd in diesem Bereich vorhandene Materialschicht 6 dargestellt.

Um die Materialschichtdicke a(x,y,n) herzustellen, ist ein verstellbares Element, wie z.B. eine Rakel, oder eine verstellbare Wanne 1 bevorzugt, die das Material vor der Belichtung der Formkörperschicht n auftragen.

## Patentansprüche

1. Verfahren zum schichtweisen Aufbau eines Formkörpers aus photopolymerisierbarem Material, nämlich einem Harz mit keramischem Füllstoff, bei dem nacheinander Formkörperschichten übereinander ausgebildet werden, indem jeweils in einer Wanne eine Materialschicht vorgegebener Dicke des photopolymerisierbaren Materials ausgebildet wird und die Bauplattform oder der an der Bauplattform zumindest teilweise aufgebaute Formkörper in die Materialschicht abgesenkt wird, sodass sich zwischen der Bauplattform bzw. dem Formkörper und dem Wannenboden eine Schicht des photopolymerisierbaren Materials ausbildet, die insbesondere durch Bestrahlung durch den Wannenboden hindurch ortsselektiv zur Ausbildung der gewünschten Form der Formkörperschicht ausgehärtet wird, wobei die vorgegebene Dicke (a) der Materialschicht (6) während des Aufbaus des Formkörpers (11) zumindest einmal variiert wird, sodass die Dicke (a) der Materialschicht (6) für die Ausbildung wenigstens einer ersten Formkörperschicht anders gewählt wird als die Materialschichtdicke für die Ausbildung wenigstens einer weiteren Formkörperschicht,
wobei
die vorgegebene Materialschichtdicke (a) in Abhängigkeit von einem errechneten Wert der Verdrängungsweglänge von an der Grenzfläche zwischen der Bauplattform (5) bzw. dem Formkörper (11) und dem photopolymerisierbaren Material entstehenden Blasen (14) variiert wird.

2. Verfahren nach Anspruch 1, **dadurch gekennzeichnet, dass** die Bauplattform (5) nach dem Aushärtungsschritt angehoben und zur Ausbildung der nächsten Formkörperschicht (10) wieder in die Wanne (1) abgesenkt wird, nachdem Material unter der angehobenen Bauplattform (5) nachgeführt wurde, um die Materialschicht (6) auszubilden.

3. Verfahren nach Anspruch 1 oder 2, **dadurch gekennzeichnet, dass** die Nachführung des Materials mittels Materialverteilung mit Hilfe einer Rakel vorgenommen wird, wobei die vorgegebene Dicke (a) der Materialschicht (6) durch Einstellung des Abstands zwischen der Unterkante der Rakel und dem Wannenboden (2) eingestellt wird.

4. Verfahren nach einem der Ansprüche 1 bis 3, **dadurch gekennzeichnet, dass** die vorgegebene Materialschichtdicke (a) in Abhängigkeit von der Fläche der vorangehenden Formkörperschicht (10) variiert wird.

5. Verfahren nach einem der Ansprüche 1 bis 4, **dadurch gekennzeichnet, dass** die vorgegebene Materialschichtdicke (a) für die Herstellung jeder Formkörperschicht (10) neu errechnet wird.

6. Verfahren nach einem der Ansprüche 1 bis 5, **dadurch gekennzeichnet, dass** wenigstens eine Materialschicht (6) in seitlicher Richtung eine Schichtdickenvariation aufweist.

7. Verfahren nach Anspruch 6, **dadurch gekennzeichnet, dass** die Dickenvariation in lediglich einer seitlichen Erstreckung oder in zwei quer zueinander stehenden seitlichen Erstreckungen vorgesehen ist.

8. Verfahren nach Anspruch 6 oder 7, **dadurch gekennzeichnet, dass** die wenigstens eine Materialschicht (6) einen rampenförmigen Bereich aufweist.

9. Verfahren nach Anspruch 6 oder 7, **dadurch gekennzeichnet, dass** die wenigstens eine Materialschicht (6) einen kegelförmigen Bereich aufweist.

10. Vorrichtung zur Durchführung des Verfahrens nach einem der Ansprüche 1 bis 9, umfassend
- eine Wanne (1) mit einem zumindest bereichsweise lichtdurchlässigen Boden (2), in die photopolymerisierbares Material einfüllbar ist,
- eine in einstellbarer Höhe über dem Wannenboden (2) gehaltene Rakel zum Ausbilden einer Materialschicht (6) auf dem Wannenboden (2), wobei zur Höhenverstellung eine Stelleinheit vorgesehen ist,
- eine Bauplattform (5), die in einstellbarer Höhe über dem Wannenboden (2) gehalten ist,
- eine Bestrahlungseinheit, die zur ortsselektiven Bestrahlung einer zwischen der Unterseite der Bauplattform (5) und dem Wannenboden (2) ausgebildeten Formkörperschicht (10) ansteuerbar ist,
- einen elektronischen Speicher für ein virtuelles dreidimensionales Modell der Formkörperschichten (10) und des daraus aufgebauten Formkörpers (11),
- eine Steuereinheit, der das virtuelle Modell der Formkörperschichten zugeführt ist und die dazu ausgebildet ist, in aufeinanderfolgenden Bestrahlungsschritten übereinanderliegende Formkörperschichten (10) auf der Bauplattform (5) jeweils mit vorgegebener Geometrie durch Steuerung der Bestrahlungseinheit zu polymerisieren und in Abhängigkeit von der Geometrie der jeweiligen Formkörperschicht (10) einen Soll-Wert der Materialschichtdicke (a) zu errechnen und ein Steuersignal für die der Rakel zugeordnete Stelleinheit zu generieren, um die Materialschichtdicke (a) gemäß dem Soll-Wert einzustellen, wobei
die Steuereinheit ausgebildet ist, um die Materialschichtdicke (a) in Abhängigkeit von einem errechneten Wert der Verdrängungsweglänge von an der Grenzfläche zwischen der Bauplattform (5) bzw. dem Formkörper (11) und dem photopolymerisierbaren Material entstehenden Blasen (14) zu errechnen.

11. Vorrichtung nach Anspruch 10, **dadurch gekennzeichnet, dass** der Soll-Wert der Materialschichtdicke (a) in Abhängigkeit von der Fläche der vorangehenden Formkörperschicht (10) errechnet wird.

12. Vorrichtung nach Anspruch 10 oder 11, **dadurch gekennzeichnet, dass** der Soll-Wert der Materialschichtdicke (a) für die Herstellung jeder Formkörperschicht (10) neu errechnet wird.

## Claims

1. A method for the layered construction of a shaped body of photopolymerizable material, in particular a resin with a ceramic filler, where layers of said shaped body are formed one after the other and one on top of the other by each forming a material layer of a predetermined thickness of the photopolymerizable material in a tank and lowering the construction platform, or the shaped body at least partially formed on the construction platform, into the material layer so as to cause a layer of the photopolymerizable material to form between the construction platform or shaped body and the tank bottom, which layer is cured in a position-selective manner, in particular by irradiation through the tank bottom, to provide the desired shape of the shaped body layer, wherein the predetermined thickness (a) of the material layer (6) is varied at least once during the construction of the shaped body (11), so that the thickness (a) of the material layer (6) for forming at least a first shaped body layer is chosen differently than the material layer thickness for forming at least a further shaped body layer, wherein the predetermined material layer thickness (a) is varied as a function of a calculated value of the displacement path length of bubbles (14) forming on the interface between the construction platform (5) or shaped body (11) and the photopolymerizable material.

2. A method according to claim 1, **characterized in that** the construction platform (5) after the curing step is lifted and again lowered into the tank (1) for the formation of the next shaped body layer (10) after having fed material below the lifted construction platform (5) to form the material layer (6) .

3. A method according to claim 1 or 2, **characterized in that** the feeding of material is performed by the distribution of material using a doctor blade, wherein the predetermined layer thickness (a) of the material layer (6) is adjusted by adjusting the distance between the lower edge of the doctor blade and the tank bottom (2).

4. A method according to any one of claims 1 to 3, **characterized in that** the predetermined material layer thickness (a) is varied as a function of the surface area of the preceding shaped body layer (10).

5. A method according to any one of claims 1 to 4, **characterized in that** the predetermined material layer thickness (a) is newly calculated for the production of each shaped body layer (10).

6. A method according to any one of claims 1 to 5, **characterized in that** at least one material layer (6) comprises a layer thickness variation in the lateral direction.

7. A method according to claim 6, **characterized in that** the thickness variation is provided in just one lateral extension, or in two lateral extensions transverse to each other.

8. A method according to claim 6 or 7, **characterized in that** the at least one material layer (6) comprises a ramp-shaped region.

9. A method according to claim 6 or 7, **characterized in that** the at least one material layer (6) comprises a conical region.

10. A device for carrying out the method according to any one of claims 1 to 10, comprising
- a tank (1) with a bottom (2) translucent at least in some areas, into which h photopolymerizable material can be filled,
- a doctor blade held at an adjustable height above the tank bottom (2) for the formation of a material layer (6) on the tank bottom (2), wherein an adjustment unit is provided for adjusting said height,
- a construction platform (5) held at an adjustable height above the tank bottom (2),
- an irradiation unit actuatable for the position-selective irradiation of a shaped body layer (10) formed between the lower side of the construction platform (5) and the tank bottom (2),
- an electronic memory for a virtual, three-dimensional model of the shaped body layers (10) and the shaped body (11) constructed thereof,
- a control unit, to which the virtual model of the shaped body layers is supplied and which is configured to polymerize in consecutive irradiation steps superimposed shaped body layers (10) on the construction platform (5) each with a predetermined geometry by controlling the irradiation unit, and to calculate as a function of the geometry of the respective shaped body layer (10) a set value for the material layer thickness (a), and to generate a control signal for the adjustment unit associated with the doctor blade in order to adjust the material layer thickness (a) according to the set value, wherein the control unit is configured to calculate the material layer thickness (a) as a function of a calculated value of the displacement path length of bubbles (14) forming on the interface between the construction platform (5) or shaped body (11) and the photopolymerizable material.

11. A device according to claim 10, **characterized in that** the set value of the material layer thickness (a) is calculated as a function of the surface area of the preceding shaped body layer (10).

12. A device according to claim 10 or 11, **characterized in that** the set value of the material layer thickness (a) is newly calculated for the production of each shaped body layer (10).

## Revendications

1. Procédé de construction en couches d'un corps formé à partir d'un matériau photopolymérisable, à savoir une résine avec une charge céramique, dans lequel des couches de corps formé sont formées successivement les unes sur les autres, en formant dans chaque cas une couche de matériau d'épaisseur prédéfinie du matériau photopolymérisable dans une cuve et la plate-forme de construction ou le corps formé au moins partiellement construit sur la plate-forme de construction est abaissé dans la couche de matériau, de sorte qu'une couche du matériau photopolymérisable se forme entre la plate-forme de construction ou le corps formé et le fond de la cuve, qui est en particulier durcie de manière sélective par irradiation à travers le fond de la cuve pour former la forme souhaitée de la couche de corps formé, l'épaisseur prédéfinie (a) de la couche de matériau (6) étant variée au moins une fois pendant la construction du corps formé (11), de sorte que l'épaisseur (a) de la couche de matériau (6) pour la formation d'au moins une première couche de corps formé est choisie différemment de l'épaisseur de la couche de matériau pour la formation d'au moins une autre couche de corps formé, l'épaisseur prédéfinie de la couche de matériau (a) étant variée en fonction d'une valeur calculée de la longueur du trajet de déplacement de bulles (14) se formant à l'interface entre la plate-forme de construction (5) ou le corps formé (11) et le matériau photopolymérisable.

2. Procédé selon la revendication 1, **caractérisé en ce que** la plate-forme de construction (5) est soulevée après l'étape de durcissement et est à nouveau abaissée dans la cuve (1) pour former la prochaine couche de corps formé (10), après que du matériau a été amené sous la plate-forme de construction (5) soulevée pour former la couche de matériau (6).

3. Procédé selon la revendication 1 ou 2, **caractérisé en ce que** l'apport de matériau est effectué par distribution de matériau à l'aide d'une racle, l'épaisseur prédéfinie (a) de la couche de matériau (6) étant réglée par réglage de la distance entre le bord inférieur de la racle et le fond de la cuve (2).

4. Procédé selon l'une quelconque des revendications 1 à 3, **caractérisé en ce que** l'épaisseur prédéfinie de la couche de matériau (a) varie en fonction de la surface de la couche de corps formé précédente (10).

5. Procédé selon l'une quelconque des revendications 1 à 4, **caractérisé en ce que** l'épaisseur prédéfinie de la couche de matériau (a) est recalculée pour la fabrication de chaque couche de corps formé (10).

6. Procédé selon l'une quelconque des revendications 1 à 5, **caractérisé en ce qu'**au moins une couche de matériau (6) présente une variation d'épaisseur dans la direction latérale.

7. Procédé selon la revendication 6, **caractérisé en ce que** la variation d'épaisseur est prévue dans une seule extension latérale ou dans deux extensions latérales perpendiculaires l'une à l'autre.

8. Procédé selon la revendication 6 ou 7, **caractérisé en ce que** ladite couche de matériau (6) présente une zone en forme de rampe.

9. Procédé selon la revendication 6 ou 7, **caractérisé en ce que** ladite couche de matériau (6) présente une zone en forme de cône.

10. Dispositif pour mettre en oeuvre le procédé selon l'une quelconque des revendications 1 à 9, comprenant
- une cuve (1) avec un fond (2) au moins partiellement transparent à la lumière, dans laquelle du matériau photopolymérisable peut être introduit,
- une racle maintenue à une hauteur réglable au-dessus du fond de la cuve (2) pour former une couche de matériau (6) sur le fond de la cuve (2), une unité de réglage étant prévue pour le réglage en hauteur,
- une plate-forme de construction (5), qui est maintenue à une hauteur réglable au-dessus du fond de la cuve (2),
- une unité d'irradiation, qui peut être commandée pour l'irradiation sélective en position d'une couche de corps formé (10) formée entre le dessous de la plate-forme de construction (5) et le fond de la cuve (2),
- une mémoire électronique pour un modèle tridimensionnel virtuel des couches de corps formé (10) et du corps formé (11) construit à partir de celles-ci,
- une unité de commande, à laquelle le modèle virtuel des couches de corps formé est fourni et qui est conçue pour polymériser des couches de corps formé (10) superposées sur la plate-forme de construction (5) avec une géométrie prédéfinie lors de chaque étape d'irradiation successive par commande de l'unité d'irradiation et, en fonction de la géométrie de la couche de corps formé (10) respective, pour calculer une valeur cible de l'épaisseur de la couche de matériau (a) et pour générer un signal de commande pour l'unité de réglage associée à la racle afin de régler l'épaisseur de la couche de matériau (a) conformément à la valeur cible, l'unité de commande étant conçue pour calculer l'épaisseur de la couche de matériau (a) en fonction d'une valeur calculée de la longueur du trajet de déplacement de bulles (14) se formant à l'interface entre la plate-forme de construction (5) ou le corps formé (11) et le matériau photopolymérisable.

11. Dispositif selon la revendication 10, **caractérisé en ce que** la valeur cible de l'épaisseur de la couche de matériau (a) est calculée en fonction de la surface de la couche de corps formé précédente (10).

12. Dispositif selon la revendication 10 ou 11, **caractérisé en ce que** la valeur cible de l'épaisseur de la couche de matériau (a) est recalculée pour la fabrication de chaque couche de corps formé (10).
